# EUROPÄISCHE PATENTSCHRIFT

(11) **EP 0 633 824 B1**
(45) Veröffentlichungstag und Bekanntmachung des Hinweises auf die Patenterteilung: **21.05.1997**
(21) Anmeldenummer: 93908905.8
(22) Anmeldetag: 02.04.1993
(51) Int. Cl.: B23P 19/00, B23P 19/06, B21J 15/32, B25B 23/04

(54) **HALTEVORRICHTUNG FÜR FÜGETEILE**
HOLDER FOR FASTENERS
DISPOSITIF DE RETENUE DE PIECES D'ASSEMBLAGE

(30) Priorität: 03.04.1992 DE 4211276
(43) Veröffentlichungstag der Anmeldung: 18.01.1995
(73) Patentinhaber: PROFIL-Verbindungstechnik GmbH & Co. KG, 61381 Friedrichsdorf (DE)
(72) Erfinder: LUCKHARDT, Wolfgang, D-6240 Königstein (DE); LUCKHARDT, Heinrich +di, / (DE)
(74) Vertreter: Morgan, James G.
(86) Internationale Anmeldenummer: EP9300836
(87) Internationale Veröffentlichungsnummer: WO9319890

(56) Entgegenhaltungen:
- DE-B- 1 254 940
- GB-A- 825 223
- GB-A- 930 165
- GB-A- 1 268 717
- GB-A- 2 073 081
- US-A- 2 658 538
- US-A- 3 368 431

## Beschreibung

Die Erfindung betrifft eine Haltevorrichtung zum Halten, Führen und selbsttätigen Freigeben eines Fügeteils, wie z.B. einer Mutter oder eines anderen Elementes in einer Einrichtung zum Anbringen des Fügeteiles an einem plattenförmigen Bauteil bzw. in einer anderen Einrichtung zum positionsgenauen Fördern des Elementes nach dem Oberbegriff des Patentanspruchs 1, und ein Verfahren nach dem Oberbegriff des Patentanspruchs 22.

Eine derartige Haltevorrichtung für eine Stanzeinrichtung zum Einpressen einer Mutter in ein Blech ist beispielsweise aus der DE-PS 12 54 940 bekannt und wird in großem Umfang in der Praxis eingesetzt. Bei dieser Stanzeinrichtung bildet das Schiebeteil den Preßstempel, der an einem mit dem Pressenoberteil fest verbundenen Gehäuse festgelegt ist und sich in den Kanal des Führungsstückes erstreckt, um die Mutter durch den Kanal zur Arbeitsstelle zuzuführen und in das auf einer Matrize aufliegende Blech einzupressen. Das Führungsstück ist seitlich an einem außermittig bezüglich des Gehäuses angeordneten Führungsständer angebracht, der entgegen der Vorspannung von Schraubendruckfedern relativ zum Pressenoberteil verschiebbar ist. Die Haltevorrichtung besteht aus zwei Halteklauen, die an dem Führungsstück im Bereich der Zuführöffnung angelenkt sind und eine Abwärtsbewegung der Mutter sperren, bis der Stempel sich abwärts bewegt und hierbei die beiden Halteklauen in ihre Öffnungsstellung ausschwenkt. Die Mutter bewegt sich dann im Kanal von der Ausgangsstelle zur Arbeitsstelle nach unten, ohne daß sie hierbei, abgesehen von den Kanalwänden, geführt und positioniert wird.

Es kann daher zu Fehlausrichtungen, Schrägstellungen oder anderen Positionierungsungenauigkeiten kommen, die entsprechende Fehler beim Montagevorgang zur Folge haben. Weitere Nachteile der vorbekannten Einrichtung bestehen darin, daß sie einen relativ hohen Herstellungsaufwand, eine große Anzahl von Einzelteilen wie auch einen beträchtlichen Platzbedarf bedingt.

Der Erfindung liegt die Aufgabe zugrunde, eine Haltevorrichtung der im Oberbegriff des Patentanspruchs 1 angegebenen Gattung so weiterzubilden, daß sie bei relativ geringem baulichem Aufwand eine präzise Positionierung des Fügeteils bzw. des zu bewegenden Elementes an der Arbeitsstelle gewährleistet.

Diese Aufgabe wird durch die im Patentanspruch 1 gekennzeichnete Erfindung gelöst.

Bei der erfindungsgemäß ausgebildeten Haltevorrichtung sind die Halteklauen nicht am Führungsstück, sondern am Schiebeteil schwenkbar angebracht, so daß sie sich mit dem Schiebeteil mitbewegen. Durch die erfindungsgemäß vorgesehene Zwangsführung werden sie bei einer Ausschubbewegung des Schiebeteils in ihrer Schließposition gehalten, bis das Schiebeteil die Arbeitsstelle erreicht, wo dann die Zwangsführung die Halteklauen zum Ausschwenken in die Öffnungsposition freigibt.

Hierdurch wird sichergestellt, daß das von dem Schiebeteil mitgenommene Element unmittelbar bis zur Arbeitsstelle in eindeutiger, stabiler Position transportiert wird, wodurch die Anzahl von möglichen Fehlern bei der an der Arbeitsstelle erfolgenden Verarbeitung erheblich reduziert wird. Dadurch werden immer identische Transport- und Arbeitsabläufe garantiert. Dies alles wird bei vergleichsweise geringem baulichem Aufwand erreicht.

Vorteilhafte Ausgestaltungen der Erfindung sind in den Unteransprüchen gekennzeichnet.

Durch die Erfindung sowie ihre vorteilhaften Ausgestaltungen werden insbesondere folgende Vorteile erzielt:
- Zwangsführung und damit hohe Positioniergenauigkeit der zu bewegenden Elemente von der Ausgangsstelle bis zur Arbeitsstelle,
- kompakte Bauweise mit geringem Raumbedarf,
- Verwendung einfacher Bauteile,
- geringe Anzahl der Bauteile,
- einfache Drehsicherung und präzise Ausrichtung des Führungssystems,
- keine Wartung (Schmierung) durch geeignete Werkstoffpaarung,
- einfacher Austausch der erfindungsgemäß ausgebildeten Einrichtung bei bereits vorhandenen Werkzeugen.

Die erfindungsgemäß ausgebildete Haltevorrichtung eignet sich besonders für den Einsatz in einer Einrichtung zum Einpressen oder Befestigen von Füge- und Hilfsfügeteilen, wie z.B. Muttern, Bolzen, Nieten in plattenförmigen Bauteilen. Sie läßt sich im Prinzip jedoch bei beliebigen Einrichtungen verwenden, bei denen die Elemente von einer Ausgangsstelle in präziser Ausrichtung zu einer Arbeits- oder Übergabestelle transportiert werden müssen.

Anhand der Zeichnung wird ein Ausführungsbeispiel der Erfindung näher erläutert. Es zeigt:
- Fig. 1: einen Längsschnitt durch eine Stanzeinrichtung zum Einpressen einer Mutter in ein Blech;
- Fig. 2: einen Querschnitt entlang der Linien II-II in Fig. 1;
- Fig. 3: eine teilweise geschnittene Draufsicht auf das Gehäuse der Stanzeinrichtung in Fig. 1;
- Fig. 4: einen Längsschnitt durch die Haltevorrichtung der Stanzeinrichtung in Fig. 1, wobei die Haltevorrichtung in der linken und rechten Hälfte der Fig. 4 in verschiedenen Betriebszuständen dargestellt ist;
- Fig. 5 bis 7: verschiedene Elemente, die mit der Haltevorrichtung der Fig. 4 verarbeitet werden können;
- Fig. 8, 9: vergrößerte Detailansichten der Haltevorrichtung in der Schließ- und Öffnungsposition.
- Fig. 10: einen Längsschnitt durch ein anderes Ausführungsbeispiel einer Stanzeinrichtung mit einer erfindungsgemäß ausgebildeten Haltevorrichtung;
- Fig. 11: einen um 90° gegenüber der Fig. 10 versetzten Längsschnitt durch die Stanzeinrichtung, wobei die Haltevorrichtungen der linken und rechten Hälfte in verschiedenen Betriebszuständen dargestellt sind;
- Fig. 12: eine Detailansicht einer Halteklaue gemäß Fig. 11 in vergrößertem Maßstab.

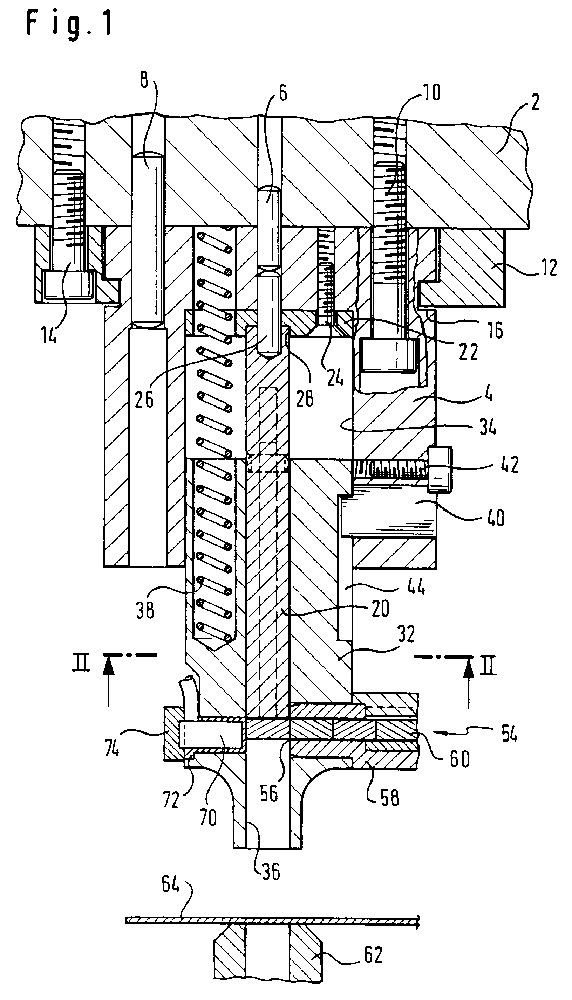

Die in Fig. 1 gezeigte Stanzeinrichtung besitzt ein Pressenoberteil 2, das durch eine (nicht gezeigte) Betätigungseinrichtung auf und abwärts bewegt werden kann. An dem Pressenoberteil 2 ist ein Gehäuse 4 durch Zentrierstifte 6, 8 positioniert und wird von zwei Schrauben 10 oder wahlweise von zwei Spannklauen 12 gegen die Unterseite des Pressenoberteils festgespannt. Die Spannklauen 12 greifen mit Vorsprüngen in Quernuten 16 des Gehäuses und sind durch Schrauben 14 am Pressenoberteil 2 befestigt.

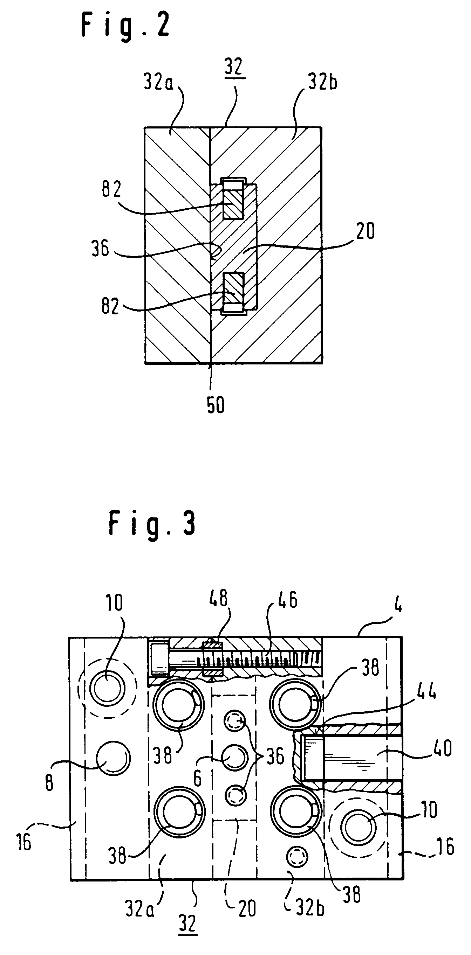

Ein Stempel 20, der in den Ansprüchen auch als Schiebeteil bezeichnet wird, ist unter Zwischenschaltung einer Druckplatte 22 mit dem Gehäuse 4 fest verbunden. Die Druckplatte 22 ist durch zwei Schrauben 24 und der Stempel 20 durch zwei Schrauben 30 am Gehäuse 4 befestigt (vgl. auch Fig. 3). Ein Zentrierstift 26, der die Druckplatte 22 durchdringt und in die den Zentrierstift 6 aufnehmende Bohrung des Gehäuses 4 ragt, übernimmt die Positionierung sowohl des Stempels 20 wie auch der Druckplatte 22 relativ zum Gehäuse 4.

Ein Führungsstück 32 ist in einer im Gehäuse 4 mittig angeordneten Führungsöffnung 34 in Längsrichtung verschiebbar gelagert. Mittig im Führungsstück 32 ist ein Kanal 36 gebildet, in dem der Stempel 20 gleitend geführt ist, so daß der Stempel 20 bei einer Relativverschiebung zwischen dem Gleitstück 32 und dem Gehäuse 4 sich entsprechend im Kanal 36 verschiebt.

Das Führungsstück 32 wird durch vier am Pressenoberteil abgestützte, innerhalb der Führungsöffnung 34 um den Stempel 20 herum verteilte Schraubendruckfedern 38 in eine Richtung weg vom Pressenoberteil 2 vorgespannt. Ein Riegel 40, der durch eine Sicherungsschraube 42 am Gehäuse 4 festgelegt ist, ragt mit einem Vorsprung in einen Schlitz 44 des Führungsstücks 32, um die durch die Federn 38 verursachte Auswärtsbewegung des Führungsstückes 32 zu begrenzen.

Der Stempel 20 und der Kanal 36 haben den gleichen rechteckigen Querschnitt. Auch das Führungsstück 32 hat den gleichen rechteckigen Querschnitt wie die Führungsöffnung 34. Hierdurch werden eine präzise Führung und Positionierung des Stempels 20 relativ zum Führungsstück 32 und des Führungsstücks 32 relativ zum Gehäuse 34 sichergestellt. Gleichzeitig wird durch diese Querschnittswahl eine einfache Drehsicherung des Stempels 20 und des Führungsstücks 32 erreicht.

Wie insbesondere aus Fig. 2 hervorgeht, ist das Führungsstück 32 in einer Ebene 50 geteilt, die mit einer Seitenwand des Kanals 36 zusammenfällt. Wie in Fig. 3 gezeigt ist, werden die beiden Teile 32a und 32b des Führungsstücks 32 durch Schrauben 46 und Zentrierhülsen 48 zusammengehalten. Die Zweiteilung des Führungsstücks 32 erleichtert die Herstellung des Kanals 36.

An dem Führungsstück 32 ist seitlich eine (nicht im einzelnen dargestellte) Muttern-Zuführungseinrichtung 54 mit einer Zuführleitung 58 angebracht, die über eine seitliche Zuführöffnung 56 Muttern 60 in den Kanal 36 einschiebt. Unterhalb des Führungsstückes 32 ist eine stationäre Matrize 62 angeordnet, auf der ein plattenförmiges Bauteil 64 in Form eines Bleches aufliegt, in das durch eine Abwärtsbewegung des Pressenoberteils 2 die im Kanal 36 liegende Mutter 60 eingepreßt werden soll. Bei einer derartigen Abwärtsbewegung des Pressenoberteils 2 verschiebt sich das Führungsstück 32, sobald es mit seiner Unterseite am Blech 64 anliegt, relativ zum Gehäuse 4 und zum Stempel 20, so daß der Stempel 20 die im Kanal 36 liegende Mutter 60 von der Ausgangsstelle angrenzend an der Zuführöffnung 56 durch den Kanal nach unten zu der Arbeitsstelle am Blech 64 verschiebt.

Aufgrund der oben geschilderten einfachen drehsicheren Führung des Führungsstücks 32 in der Führungsöffnung 34 und des Stempels 20 im Kanal 36 ergibt sich eine lagegenaue Ausrichtung des Kanals 36 zur stationären Matrize 62. Dies ist vor allem dann wichtig, wenn die zu verarbeitenden Fügeteile, wie z.B. rechteckige Muttern, in lagegenauer Ausrichtung in das Blech 64 eingepreßt oder in anderer Weise daran befestigt werden müssen.

Zweckmäßigerweise bestehen die gegeneinander verschiebbaren Teile wie das Gehäuse 4, das Führungsstück 32 und der Stempel 20 aus Werkstoffen, die eine Schmierung überflüssig machen. So können das Gehäuse 4 und das Führungsstück 32 als Gußteile aus Bronze hergestellt sein, während der Stempel 20 aus einem Werkzeugstahl bestehen kann.

Auf der der Zuführöffnung 56 gegenüberliegenden Seite des Kanals 36 befindet sich ein Näherungsschalter 70, der die richtige Lage der Mutter 60 quittiert. Der Näherungsschalter 70 befindet sich in einer Schutzkappe 72, die eine Beschädigung des Näherungsschalters 70 durch die Mutter verhindert. Der Näherungsschalter 70 und die Schutzkappe 72 sind durch eine Klemmplatte 74 am Führungsstück 32 angebracht.

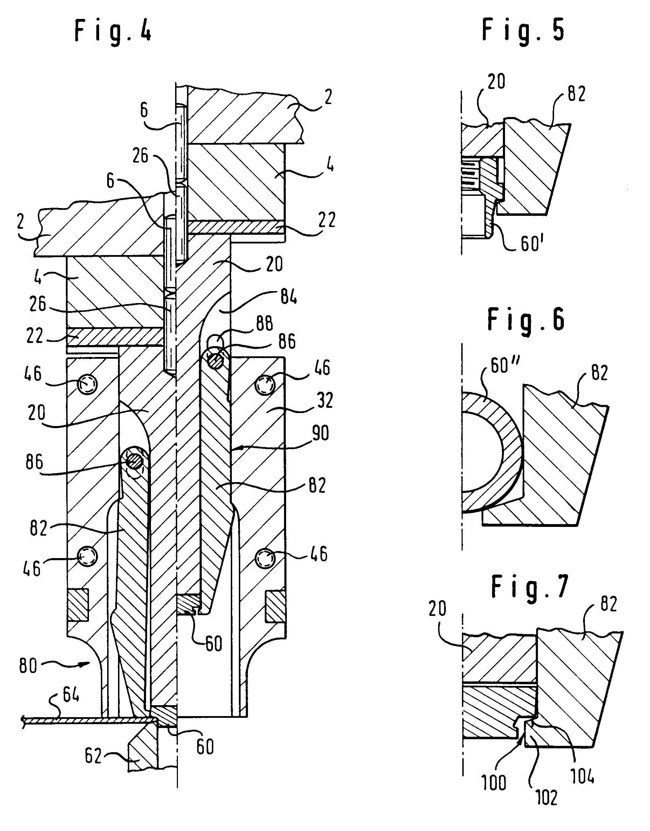

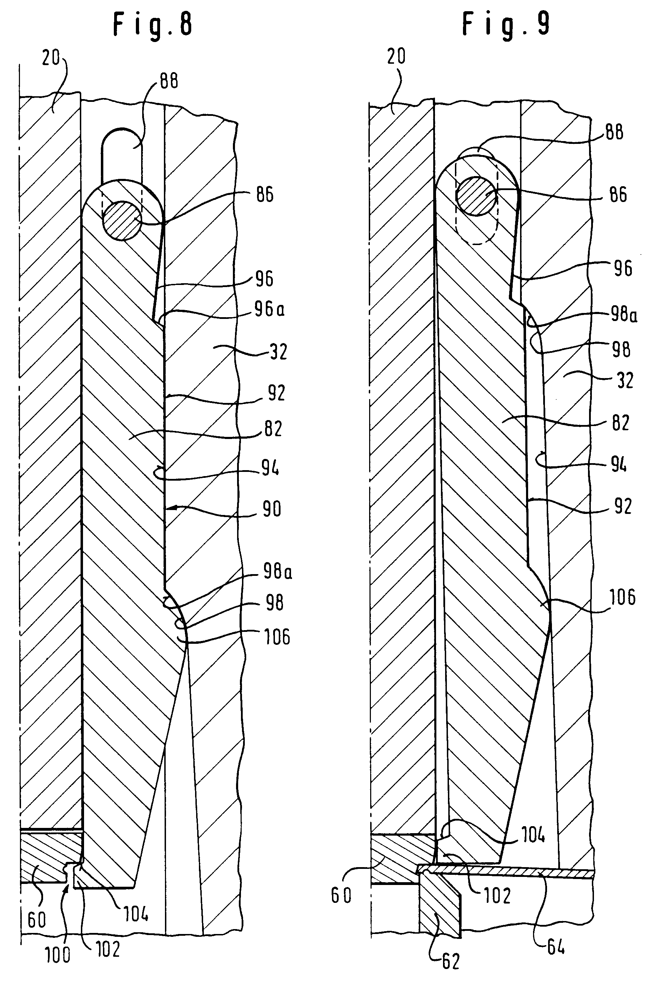

Wie insbesondere aus den Fig. 4, 8 und 9 hervorgeht, ist eine Haltevorrichtung 80 vorgesehen, die die Mutter 60 bei ihrer Bewegung von der Ausgangsstelle (rechte Seite in Fig. 4) bis zur Arbeitsstelle (linke Seite in Fig. 4) präzise in ihrer Lage hält. Die Haltevorrichtung 80 besteht aus zwei Halteklauen 82, die in Längsnuten 84 des Stempels 20 angeordnet und durch Lagerbolzen 86 in Langlöchern 88 des Stempels 20 schwenkbar gelagert sind. Hierdurch können die Halteklauen 82 zwischen einer Schließposition, in der sie die Mutter in Anlage mit dem unteren Ende des Stempels 20 halten (rechte Seite in Fig. 4, Fig. 8) und einer Öffnungsposition, in der sie die Mutter freigeben (linke Seite in Fig. 4, Fig. 9) verschwenkt werden, wie noch genauer erläutert wird.

Den Halteklauen 82 ist eine Zwangsführung 90 zugeordnet, die die Halteklauen 82 bei einer Bewegung des Stempels 20 und damit der Mutter 60 von der Ausgangsstelle zur Arbeitsstelle in der Schließposition hält. Wie im einzelnen aus den Fig. 8 und 9 hervorgeht, besteht die Zwangsführung 90 aus an den Halteklauen 82 und dem Führungsstück 32 vorgesehen Führungsflächen 92, 94, die bei einer Relativbewegung zwischen dem Führungsstück 32 und dem Stempel 20 gleitend aneinander anliegen. Am oberen Ende der Führungsfläche 92 und am unteren Ende der Führungsfläche 94 befindet sich ein Rücksprung 96 in der Halteklaue 82 bzw. ein Rücksprung 98 im Führungsstück 32, die ein Ausschwenken der Halteklauen 82 in die Öffnungsposition (linke Seite der Fig. 4, Fig. 9) ermöglichen, wenn der Stempel 20 und damit die Mutter 60 die Arbeitsstelle erreicht haben. Die Rücksprünge 96 und 98 sind mit Schrägflächen 96a und 98a versehen, die bei einer Rückziehbewegung des Stempels 20 die Halteklauen 82 wieder in ihre Schließposition zurückschwenken.

Wie insbesondere aus den Fig. 7 und 8 hervorgeht, wird die Mutter 60 in der Schließposition der Halteklauen 82 durch eine Schrägflächenverbindung 100 am Stempel 20 gehalten. Die Schrägflächenverbindung 100 wird von an Haltenasen 102 der Halteklauen 82 vorgesehen Schrägflächen 104 gebildet, die an einem Rand der Mutter 60 anliegen und bei einer durch die Langlochverbindung 86, 88 ermöglichten relativen Längsverschiebung zwischen den Halteklauen 82 und dem Stempel 20 die Halteklauen auswärts schwenken, wie im folgenden noch genauer erläutert wird.

Die Wirkungsweise der beschriebenen Einrichtung wird nun erläutert.

Fig. 1 zeigt den Ausgangszustand, in dem eine Mutter 60 von der Muttern-Zuführungseinrichtung 54 in den Kanal 36 eingeschoben wurde, und zwar zwischen die Unterseite des Stempels 20 und die Schrägflächen 104 der Haltenasen 102 der Halteklauen 82, die sich in ihrer Schließposition befinden (rechte Seite der Fig. 4, Fig. 8). Wird nun das Pressenoberteil 2 mit den daran befestigten Teilen nach unten bewegt, so legt sich zunächst die Unterseite des Führungsstücks 32 an das auf der Matrize 62 liegende Blech 64 an. Bei der weiteren Abwärtsbewegung des Pressenoberteils 2 schiebt sich das Führungsstück 32 entgegen der Vorspannkraft der Federn 38 in die Führungsöffnung 34 hinein, während gleichzeitig der Stempel 20 im Kanal 36 nach unten gleitet. Hierbei bewegt er die im Kanal 36 liegende Mutter 60 von der Ausgangsstelle bis zur Arbeitsstelle am Blech 64. Während dieser gesamten Abwärtsbewegung wird die Mutter 60 von den Halteklauen 82 in ihrer Lage fixiert, die durch die Zwangsführung 90 in Form der Führungsflächen 92 und 94 am Ausschwenken gehindert werden.

Hat nun der Stempel 20 die Arbeitsstelle erreicht, so setzen zunächst die über den Stempel 20 und auch über die Mutter 60 vorstehenden Halteklauen 82 auf dem Blech 64 auf. Gleichzeitig erreichen die Rücksprünge 96 der Halteklauen 82 die Rücksprünge 98 im Führungsstück 32. Da ferner die Halteklauen 82 und der Stempel 20 aufgrund der Langlochverbindung 86, 88 eine begrenzte Längsverschiebung ausführen können, bewegt sich der Stempel 20 mit der Mutter 60 weiter nach unten. Hierbei drückt die Mutter 60 über die Schrägflächen 104 die Halteklauen 82 nach außen in ihre Öffnungsposition, was durch die Rücksprünge 96, 98 ermöglicht wird (Fig. 9). Die Mutter 60 wird somit von den Halteklauen 82 freigegeben, so daß sie durch den Stempel 82 in das Blech 64 eingedrückt werden kann. Auch während des Einpreßvorganges bleibt die Mutter 60 durch Anlage an den Haltenasen 102 der Halteklauen 82 in ihrer Lage fixiert.

Wird nach Beendigung des Einpreßvorganges das Pressenoberteil 2 und damit der Stempel 20 wieder zurückbewegt, so schwenken die Schrägflächen 96a, 98a der Rücksprünge 96, 98 die Halteklauen 82 in ihre Schließposition zurück. Ein an den Halteklauen 82 vorgesehener Nockenvorsprung 106 wirkt bei der Rückziehbewegung mit einer Nockenfläche in Form der Schrägfläche 98a des Führungsstücks 32 zusammen, um die Halteklauen 82 in Längsrichtung wieder zurückzustellen. Es kann dann wieder ein neuer Einstanzvorgang beginnen.

Mit der beschriebenen Einrichtung können herkömmliche Muttern mit rechteckigem Querschnitt (Fig. 7) verarbeitet werden. Stattdessen können auch Muttern 60 (Fig. 5) mit rundem Querschnitt verarbeitet werden. In diesem Fall könnten die Halteklauen in ihrem an der Mutter 60 angreifenden Bereich eine an den Querschnitt der Mutter 60' angepaßte abgerundete Form haben. Auch könnten mehr als zwei, z.B. drei oder vier Halteklauen vorgesehen werden.

Wie in Fig. 6 angedeutet ist, könnte die beschriebene Haltevorrichtung zum Halten und Transportieren anderer Elemente 60'' beliebiger Form eingesetzt werden, falls es bei dem Transport der Elemente 60'' auf eine präzise Lagefixierung ankommt.

Wie bereits eingangs erwähnt, läßt sich die beschriebene Haltevorrichtung bei beliebigen Einrichtungen verwenden, bei denen die Elemente von einer Ausgangsstelle in präziser Ausrichtung zu einer Arbeits- oder Übergabestelle transportiert werden müssen. So kann die beschriebene Haltevorrichtung beispielsweise in einer elektrischen Schweißvorrichtung zum Anschweißen einer Mutter oder eines anderen Elements an einem plattenförmigen Bauteil verwendet werden. Bei dieser Ausführungsform dient der Stempel 20 als eine Elektrode und die stationäre Matrize 62 als zweite Elektrode. Es kommt dann nicht zum Durchstanzen des Blechteils 64, da die Matrize 62 massiv, d.h. ohne Bohrung ausgebildet ist. Der als Elektrode dienende Stempel 20 hat lediglich die zum Schweißen erforderliche Anpreßkraft aufzubringen. Es versteht sich, daß in diesem Fall Stromzuführungen für die Elektroden, Kühlkanäle, Isolierungen etc. vorgesehen sind.

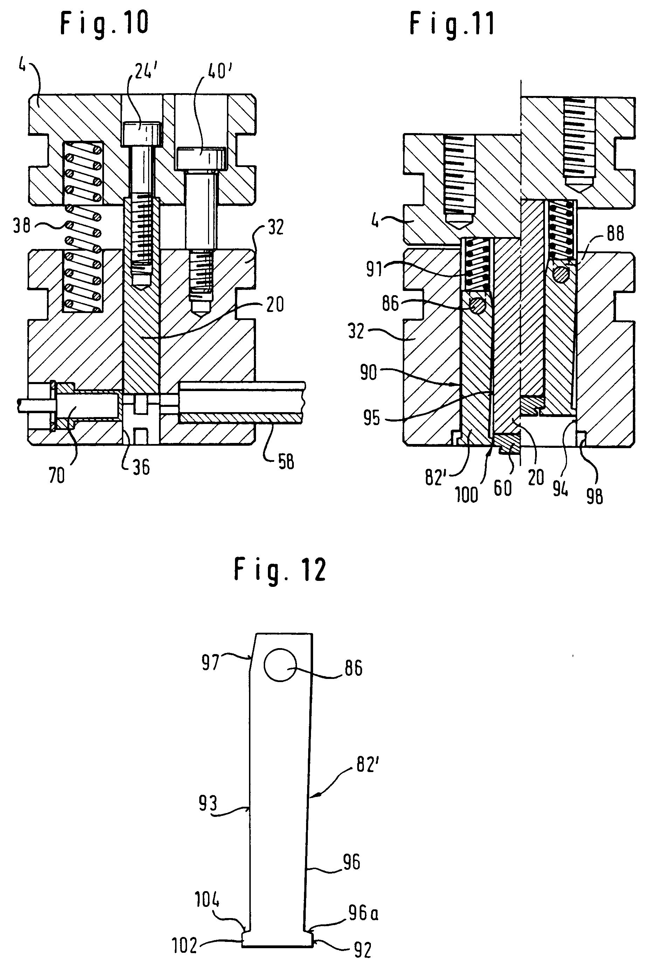

Die Fig. 10 bis 12 zeigen ein anderes Ausführungsbeispiel einer Stanzeinrichtung zum Einpressen von Muttern in ein Blech mit einer etwas anders ausgebildeten Haltevorrichtung. In den Fig. 10 bis 12 wurden die gleichen Bezugszeichen wie in den vorhergehenden Figuren verwendet, soweit die damit bezeichneten Bauteile übereinstimmen oder sich entsprechen.

Wie in Fig. 10 zu sehen ist, ist das Führungsstück 32 der Stanzeinrichtung nicht im Gehäuse 4 geführt; vielmehr haben beide Bauteile 4 und 32 gleiche Außenabmessungen und sind vertikal untereinander angeordnet. Die Führung des Führungsstücks 32 relativ zu dem Gehäuse 4 übernimmt der Stempel 20, der mittels einer zentralen Schraube 24' im Gehäuse 4 festgelegt ist. Als Hubbegrenzung bei einer Relativverschiebung zwischen dem Führungsstück 32 und dem Gehäuse 4 dienen Schrauben 40'.

Die Haltevorrichtung, die die Mutter 60 bei ihrer Bewegung im Führungskanal 36 in ihrer Lage hält, hat im Prinzip den gleichen Aufbau wie die Haltevorrichtung der vorhergehenden Figuren, unterscheidet sich von dieser jedoch in folgenden Merkmalen. Statt der in den Fig. 8 und 9 gezeigten Nockenmittel 98a, 106 sind gemäß Fig. 11 Federn 91 vorgesehen, die am Gehäuse 4 abgestützt sind und die Halteklauen 82' in Längsrichtung nach unten (in den Figuren) vorspannen. Die Federn 91 sorgen somit für eine Rückstellung der Halteklauen 82' in den Langlöchern 88, wenn der Stempel zusammen mit den Halteklauen 82' nach Einpressen der Mutter 60 wieder nach oben zurückbewegt wird.

Da bei dem Ausführungsbeispiel der Fig. 10 bis 12 kein Nockenvorsprung 106 vorgesehen ist, kann der am unteren Ende der Führungsfläche 94 des Führungsstückes 32 vorgesehene Rücksprung 98 auf eine kurze Länge beschränkt werden. Dementsprechend kann die Führungsfläche 92 der jeweiligen Halteklaue 82', an deren oberen Ende sich der Rücksprung 96 anschließt, auf eine kurze axiale Länge am unteren Ende der jeweiligen Halteklaue 82' beschränkt werden. Um ein Ausschwenken der Halteklauen 82' am Ende ihrer Abwärtsbewegung zu ermöglichen (linke Seite der Fig. 11), sind die Halteklauen 82' auf ihrer Innenseite, im Bereich der Anlageflächen 93 und 95 mit jeweils einer Abschrägung 97 versehen, die von der Anlagefläche 93 auf Höhe des Bolzens 86 schräg nach oben verläuft.

Die Wirkungsweise der in Fig. 11 gezeigten Haltevorrichtung ist im Prinzip die gleiche wie der der Haltevorrichtung nach den vorhergehenden Figuren, abgesehen davon, daß die Halteklauen 82' durch die Federn 91 in ihren Langlöchern relativ zum Stempel 20 zurückgestellt werden, wenn nach Beendigung des Einpreßvorgangs der Stempel 20 zurückbewegt wird und die Halteklauen 82' einwärts geschwenkt sind.

## Patentansprüche

1. Haltevorrichtung zum Halten, Führen und selbsttätigen Freigeben eines Fügeteils, wie z.B. einer Mutter oder eines anderen Elementes in einer Einrichtung zum Anbringen des Fügeteiles an einem plattenförmigen Bauteil bzw. in einer anderen Einrichtung zum positionsgenauen Fördern des Elementes, mit einem Führungsstück (32), das einen Kanal (36) aufweist, dem das Element (60) durch eine seitliche Zuführöffnung (56) zuführbar ist, mit einem Schiebeteil (20), das durch eine Relativbewegung zwischen Führungsstück und Schiebeteil im Kanal (36) längsverschiebbar ist, um in einer Ausschubbewegung das Element (60) von einer Ausgangsstelle benachbart zur Zuführöffnung (56) zu einer Arbeitsstelle am einen Ende des Kanals (36) zu verschieben, und mit mindestens zwei durch Lagerbolzen (86) schwenkbar gelagerten Halteklauen (82), die in einer einwärts geschwenkten Schließposition das Element (60) in Anlage an dem Schiebeteil (20) halten und selbsttätig in eine das Element (60) freigebende Öffnungsposition ausschwenkbar sind, dadurch gekennzeichnet, daß die Halteklauen (82) am Schiebeteil (20) schwenkbar angebracht sind, so daß sie sich mit dem Schiebeteil (20) mitbewegen, und daß für die Halteklauen (82) eine Zwangsführung (90) vorgesehen ist, die bei einer Ausschubbewegung des Schiebeteils (20) die Halteklauen (82) in ihrer Schließposition hält und zum Ausschwenken in die Öffnungsposition erst freigibt, wenn das Schiebeteil (20) die Arbeitsstelle am Ende des Kanals (36) erreicht.

2. Haltevorrichtung nach Anspruch 1, dadurch gekennzeichnet, daß die Zwangsführung (90) an den Halteklauen (82) und dem Führungsstück (32) vorgesehene Führungsflächen (92, 94) aufweist, die bei einer Relativbewegung zwischen Führungsstück (32) und Schiebeteil (20) gleitend aneinander anliegen und dadurch ein Ausschwenken der Halteklauen (82) verhindern.

3. Haltevorrichtung nach Anspruch 2, dadurch gekennzeichnet, daß sich an die Führungsflächen (92, 94) jeweils ein als Freimachung dienender Rücksprung (96, 98) anschließt, die ein Ausschwenken der Halteklauen (82) ermöglichen, wenn das Schiebeteil (20) bei seiner Ausschubbewegung die Arbeitsstelle erreicht.

4. Haltevorrichtung nach Anspruch 3, dadurch gekennzeichnet, daß die Rücksprünge (96, 98) mit Schrägflächen (96a, 96b) versehen sind, die bei einer Rückziehbewegung des Schiebeteils (20) die Halteklauen (82) in ihre Schließposition zurückschwenken.

5. Haltevorrichtung nach einem der vorhergehenden Ansprüche, dadurch gekennzeichnet, daß die Lagerbolzen (86) der Halteklauen (82) in Langlöchern (88) des Schiebeteils (20) angeordnet sind, um eine begrenzte Längsverschiebung der Halteklauen (82) relativ zum Schiebeteil (20) zu ermöglichen, und daß zwischen den Halteklauen (82) und dem Schiebeteil (20) eine Schrägflächenverbindung (100) vorgesehen ist, die bei einer derartigen Längsverschiebung die Halteklauen (82) in ihre Öffnungsposition ausschwenkt.

6. Haltevorrichtung nach Anspruch 5, dadurch gekennzeichnet, daß die Halteklauen (82) in Längsrichtung über das Schiebeteil (20) vorstehen, so daß sie bei einer Ausschubbewegung des Schiebeteils (20) durch Auftreffen auf eine stationäre Gegenfläche (62, 64) aufgehalten werden und dadurch die zum Ausschwenken erforderliche Längsverschiebung relativ zum Schiebeteil (20) ausführen.

7. Haltevorrichtung nach Anspruch 5 oder 6, dadurch gekennzeichnet, daß die Schrägflächenverbindung (100) aus an Haltenasen (102) der Halteklauen (82) gebildeten Schrägflächen (104) besteht, die in der Schließposition der Halteklauen (82) am Element (60) anliegen.

8. Haltevorrichtung nach einem der Ansprüche 5 bis 7, dadurch gekennzeichnet, daß die Halteklauen (82) jeweils mit einem Nockenvorsprung (106) versehen sind, der bei einer Rückziehbewegung des Schiebeteils (20) mit einer Nockenfläche des Führungsstückes (32) zusammenwirkt, um die Halteklauen (82) in Längsrichtung relativ zum Schiebeteil (20) zurückzustellen.

9. Haltevorrichtung nach einem der Ansprüche 5 bis 7, dadurch gekennzeichnet, daß die Kalteklauen (82') durch Federn (91) in Längsrichtung so vorgespannt sind, daß sie durch die Federkraft bei einer Rückziehbewegung des Schiebeteils (20) relativ zu diesem zurückgestellt werden.

10. Haltevorrichtung nach einem der vorhergehenden Ansprüche, dadurch gekennzeichnet, daß die Halteklauen (82) in Längsnuten (84) des Schiebeteils (20) angeordnet sind.

11. Haltevorrichtung nach einem der vorhergehenden Ansprüche, dadurch gekennzeichnet, daß die Lagerbolzen (86) der Halteklauen (82) durch Anlage an Wandflächen des Kanals (36) gegen Herausrutschen gesichert sind.

12. Haltevorrichtung nach einem der vorhergehenden Ansprüche, dadurch gekennzeichnet, daß das Schiebeteil als Stempel (20) einer Stanzeinrichtung ausgebildet ist, der an einem Gehäuse (4) eines Pressenoberteils (2) befestigt ist, das relativ zu einer das plattenförmige Bauteil (64) aufnehmenden Matritze (62) vertikal bewegbar ist.

13. Haltevorrichtung nach Anspruch 12, dadurch gekennzeichnet, daß der den Stempel (20) aufnehmende Kanal (36) mittig im Führungsstück (32) angeordnet ist und das Führungsstück (32) in einer mittig angeordneten Führungsöffnung (34) des Gehäuses (4) verschiebbar gelagert ist.

14. Haltevorrichtung nach Anspruch 13, dadurch gekennzeichnet, daß das Führungsstück (32) durch innerhalb der Führungsöffnung (34) um den Stempel (20) herum angeordnete Federn (38) in Richtung weg vom Pressenoberteil (2) vorgespannt ist.

15. Haltevorrichtung nach Anspruch 13 oder 14, dadurch gekennzeichnet, daß der Kanal (36) und/oder die Führungsöffnung (34) einen rechteckigen Querschnitt haben.

16. Haltevorrichtung nach einem der vorhergehenden Ansprüche, dadurch gekennzeichnet, daß das Führungsstück (32) zur leichteren Herstellbarkeit des Kanals (36) geteilt ist und die beiden Teile (32a, b) durch lösbare Befestigungsmittel (46, 48) zusammengehalten werden.

17. Haltevorrichtung nach einem der Ansprüche 12 bis 16, dadurch gekennzeichnet, daß der Stempel (20) über eine am Boden der Führungsöffnung (34) angeordnete Druckplatte (22) und einen die Druckplatte (22) durchdringenden Zentrierstift (26) am Gehäuse (4) festgelegt ist.

18. Haltevorrichtung nach einem der Ansprüche 12 bis 17, dadurch gekennzeichnet, daß das Gehäuse (4) wahlweise durch Befestigungsschrauben (10) oder Spannklauen (12) unter Verwendung von Zentrierstiften (6, 8) am Pressenoberteil (2) angebracht ist.

19. Haltevorrichtung nach einem der vorhergehenden Ansprüche, dadurch gekennzeichnet, daß auf der der Zuführöffnung (56) gegenüberliegenden Seite des Kanals (36) ein Näherungsschalter (70) zum Feststellen des Vorhandenseins eines Elementes (60) angeordnet ist.

20. Haltevorrichtung nach einem der vorhergehenden Ansprüche, dadurch gekennzeichnet, daß das Schiebeteil (20) und das Führungsstück (32) aus eine Schmierung überflüssig machenden Werkstoffen bestehen, wobei das Führungsstück (32) insbesondere aus Bronze und das Schiebeteil (20) insbesondere aus Werkzeugstahl besteht.

21. Haltevorrichtung nach einem der Ansprüche 1 bis 12, dadurch gekennzeichnet, daß die Haltevorrichtung ein Teil einer elektrischen Schweißvorrichtung zum Anschweißen einer Mutter oder eines anderen Fügeteils an dem plattenförmigen Bauteil bildet, wobei das Schiebeteil (20) als eine Elektrode und eine das plattenförmige Bauteil (64) abstützende stationäre Gegenfläche (62) als zweite Elektrode dient, die durch Stromzuführungen mit elektrischer Leistung versorgt werden.

22. Verfahren zum Einsetzten eines Füge- oder Hilfsfügeteils (60) in ein plattenförmiges Bauteil (64) mittels einer Einrichtung zum Einpressen oder Befestigen von Füge- und Hilsffügeteilen, wie z. B. Muttern, Bolzen, Nieten in plattenförmigen Bauteilen (64)
**dadurch gekennzeichnet,**
daß das Füge- bzw. Hilsfügeteil (60) nach der Übergabe an die Einrichtung über den ganzen Weg bis zum plattenförmigen Bauteil (64) ohne weitere Übergabe zwischen den Elementen (20, 82) der Einrichtung gehalten wird.

## Claims

1. Holding device for the holding, guiding and automatic release of a fastener part, such as for example a nut or another element, in an apparatus for the attachment of the fastener part to a plate-like component or in another apparatus for the positionally accurate conveyance of the element, comprising a guide piece (32) having a channel (36) to which the element (60) can be supplied through a lateral supply opening (56), a plunger (20), which is longitudinally displaceable in the channel (36) through a relative movement between the guide piece and the plunger in order to displace the element (60) in a push-out movement from a starting position adjacent to the supply opening (56) to a working position at one end of the channel (36), and at least two holding claws (82) which are pivotally journalled by pivot pins (86), which, in an inwardly pivoted closed position, hold the element (60) in contact with the plunger (20) and can be automatically outwardly pivoted into an open position releasing the element (60), characterised in that the holding claws (82) are pivotally mounted on the plunger (20) so that they move with the plunger (20); and in that a compulsory guide (90) is provided for the holding claws (82), which holds the holding claws in their closed position during a push-out movement of the plunger (20) and first releases them for outward pivoting into the open position when the plunger (20) reaches the working position at the end of the channel (36).

2. Holding device in accordance with claim 1, characterised in that the compulsory guide (90) has guide surfaces (92, 94) provided at the holding claws (82) and at the guide piece (32), which, during a relative movement between the guide piece (32) and the plunger (20) slidingly contact one another and thereby prevent an outward pivoting of the holding claws (82).

3. Holding device in accordance with claim 2, characterised in that a set-back step (96, 98) serving as a relief follows the guide surfaces (92, 94) in each case and enable an outward pivotal movement of the holding claws (82) when the plunger (20) reaches the working position during its push-out movement.

4. Holding device in accordance with claim 3, characterised in that the set-back portions (96, 98) are provided with oblique surfaces (96a, 96b) which pivot the holding claws (82) back into their closed position during a retraction movement of the plunger (20).

5. Holding device in accordance with one of the preceding claims, characterised in that the bearing pins (86) for the holding claws (82) are arranged in elongate slots (88) of the plunger (20) in order to enable a restricted longitudinal displacement of the holding claws (82) relative to the plunger (20); and in that an inclined surface connection (100) is provided between the holding claws (82) and the plunger (20) which pivots the holding claws (82) outwardly into their open position during such a longitudinal displacement.

6. Holding device in accordance with claim 5, characterised in that the holding claws (82) project in the longitudinal direction beyond the plunger (20) so that they are stopped during a push-out movement of the plunger (20) by striking a stationary counter-surface (62, 64) and thereby execute the longitudinal displacement relative to the plunger (20) necessary for the outward pivoting movement.

7. Holding device in accordance with claim 5 or claim 6, characterised in that the inclined surface connection (100) consists of inclined surfaces (104) provided on the holding noses (102) of the holding claws (82), with the inclined surfaces contacting the element (60) in the closed position of the holding claws (82).

8. Holding device in accordance with one of the claims 5 to 7, characterised in that the holding claws (82) are each provided with a cam-projection (106) which, during a retraction movement of the plunger (20), cooperates with a cam-surface of the guide piece (32) in order to reset the holding claws (82) in the longitudinal direction relative to the plunger (20).

9. Holding device in accordance with one of the claims 5 to 7, characterised in that the holding claws (82') are so biased by springs (91) in the longitudinal direction that during a retraction movement of the plunger (20) they are reset relative to the latter by the spring force (10).

10. Holding device in accordance with one of the preceding claims, characterised in that the holding claws (82) are arranged in longitudinal grooves (84) of the plunger (20).

11. Holding device in accordance with one of the preceding claims, characterised in that the bearing pins (84) of the holding claws (82) are secured against sliding out by contact at the wall surfaces of the channel (36).

12. Holding device in accordance with one of the preceding claims, characterised in that the plunger is formed as the plunger (20) of a punch device, which is secured to a housing (4) of an upper part (2) of a press which is vertically moveable relative to a die (62) which receives the plate-like component (64).

13. Holding device in accordance with claim 12, characterised in that the channel (36), which receives the plunger (20) is centrally arranged in the guide piece (32), and in that the guide piece (32) is displaceably mounted in a centrally arranged guide opening (34) of the housing (4).

14. Holding device in accordance with claim 13, characterised in that the guide piece (32) is biased in the direction away from the upper part (2) of the press by springs (38) arranged around the plunger (20) within the guide opening (34).

15. Holding device in accordance with claim 13 or claim 14, characterised in that the channel (36) and/or the guide opening (34) have a rectangular cross section.

16. Holding device in accordance with one of the preceding claims, characterised in that the guide piece (32) is split for easier manufacture of the channel (36), and the two parts (32a, 32b) are kept together by releasable fastening means (46, 48).

17. Holding device in accordance with one of the claims 12 to 16, characterised in that the plunger (20) is fixed to the housing (4) via a pressure plate (22) arranged at the base of the guide opening (34) and a centring pin (26) which passes through the pressure plate (22).

18. Holding device in accordance with one of the claims 12 to 17, characterised in that the housing (4) is selectively attached to the upper part (2) of the press by fastener screws (10) or by clamping claws (12), using centring pins (6, 8).

19. Holding device in accordance with one of the preceding claims, characterised in that a proximity switch (70) for detecting the presence of an element (60) is provided at the side of the channel (36) opposite to the supply opening (56).

20. Holding device in accordance with one of the preceding claims, characterised in that the plunger (20) and the guide piece (32) consist of materials which make lubrication superfluous, with the guide piece (32) consisting in particular of bronze and the plunger (20) consisting in particular of tool steel.

21. Holding device in accordance with one of the claims 1 to 12, characterised in that the holding device forms part of an electrical welding apparatus for the welding on of a nut or of another fastener element to the plate-like component, with the plunger (20) serving as one electrode, and with a stationary counter-surface (62) supporting the plate-like component (64) serving as the second electrode, which are supplied with electrical power via current leads.

22. Method of insertion of a fastener part or of an auxiliary fastener part (60) into a plate-like component (64) by means of a device for the pressing in or attachment of fastener parts or auxiliary fastener parts, such as nuts, bolts, rivets in plate-like components, characterised in that the fastener part or auxiliary fastener part (60) is held after transfer to the device without further transfer between the elements (20, 82) of the device over the whole path up to the plate-like component (64).

## Revendications

1. Dispositif de maintien destiné à maintenir, à guider et à libérer automatiquement une pièce d'assemblage, comme par exemple un écrou ou un autre élément dans un appareil destiné à amener la pièce d'assemblage vers un composant en forme de plaque, ou dans un autre appareil pour transporter en position exacte l'élément, comprenant une pièce de guidage (32), qui présente un canal (36) auquel on peut amener l'élément (60) via une ouverture d'amenée latérale (56), comprenant une pièce coulissante (20), qui est déplaçable longitudinalement dans le canal (36) par un déplacement relatif entre la pièce de guidage et la pièce coulissante, afin de déplacer l'élément (70), dans un déplacement de déploiement, depuis un emplacement de départ voisin de l'ouverture d'admission (56) jusqu'à un emplacement de travail à une extrémité du canal (36), et comprenant au moins deux griffes de maintien (82), montées en basculement au moyen de goujons de montage (86) et qui maintiennent, dans une position de fermeture basculée vers l'intérieur, l'élément (60) en contact contre la pièce coulissante (20) et sont susceptibles d'être automatiquement basculées jusque dans une position d'ouverture qui libère l'élément (60), caractérisé en ce que les griffes de maintien (82) sont montées de manière basculante sur la pièce coulissante (20) de manière qu'elles se déplacent avec la pièce coulissante (20), et en ce qu'il est prévu pour les griffes de maintien (82) un guidage forcé (90), lequel maintient lors d'un déplacement de déploiement de la pièce coulissante (20) les griffes de maintien (82) dans leur position de fermeture et ne les libère pour basculer jusque dans la position d'ouverture que lorsque la pièce coulissante (20) atteint l'emplacement de travail à l'extrémité du canal (36).

2. Dispositif de maintien selon la revendication 1, caractérisé en ce que le guidage forcé (90) comporte des surfaces de guidage (92, 94) prévues sur les griffes de maintien (82) et sur la pièce de guidage (32), lesquelles sont en contact de coulissement l'une contre l'autre lors d'un déplacement relatif entre la pièce de guidage (32) et la pièce coulissante (20), et empêchent ainsi un basculement vers l'extérieur des griffes de maintien (82).

3. Dispositif de maintien selon la revendication 2, caractérisé en ce qu'une saillie postérieure (96, 98), qui sert d'élément de libération, se raccorde respectivement aux surfaces de guidage (92, 94), lesdites saillies permettant un basculement des griffes de maintien (82) vers l'extérieur lorsque la pièce coulissante (20) atteint l'emplacement de travail lors d'un déplacement de déploiement.

4. Dispositif de maintien selon la revendication 3, caractérisé en ce que les saillies postérieures (96, 98) sont pourvues de surfaces obliques (96a, 96b) qui basculent les griffes de maintien (82) en retour jusque dans leur position de fermeture lors d'un déplacement de retrait de la pièce coulissante (20).

5. Dispositif de maintien selon l'une des revendications précédentes, caractérisé en ce que les goujons de montage (86) des griffes de maintien (82) sont agencés dans des trous oblongs (88) de la pièce coulissante (20), afin de permettre un déplacement longitudinal limité des griffes de maintien (82) par rapport à la pièce coulissante (20), et en ce qu'il est prévu une jonction de surfaces obliques (100) entre les griffes de maintien (82) et la pièce coulissante (20), ladite jonction faisant basculer les griffes de maintien (82) jusque dans leur position ouverte lors d'un tel déplacement longitudinal.

6. Dispositif de maintien selon la revendication 5, caractérisé en ce que les griffes de maintien (82) dépassent en direction longitudinale au-delà de la pièce coulissante (20), de sorte que lors d'un déplacement de déploiement de la pièce coulissante (20) elles sont arrêtées lorsqu'elles rencontrent une contre-surface stationnaire (62, 64) et exécutent ainsi par rapport à la pièce coulissante (20) le déplacement longitudinal nécessaire pour le basculement vers l'extérieur.

7. Dispositif de maintien selon l'une ou l'autre des revendications 5 et 6, caractérisé en ce que la jonction de surfaces obliques (100) est constituée par des surfaces obliques (104) réalisées sur des doigts de maintien (102) des griffes de maintien (82) et qui sont en contact contre l'élément (60) dans la position de fermeture des griffes de maintien (82).

8. Dispositif de maintien selon l'une des revendications 5 à 7, caractérisé en ce que les griffes de maintien (82) sont respectivement pourvues d'une saillie en forme de came (106), laquelle coopère lors d'un déplacement de retrait de la pièce coulissante (20) avec une surface de came de la pièce de guidage (32), afin de ramener les griffes de maintien (82) en direction longitudinale par rapport à la pièce coulissante (20).

9. Dispositif de maintien selon l'une des revendications 5 à 7, caractérisé en ce que les griffes de maintien (82) sont précontraintes par des ressorts (91) en direction longitudinale de telle manière qu'elles sont reculées par rapport à la pièce coulissante (20) sous la force du ressort lors d'un déplacement de retrait de cette dernière.

10. Dispositif de maintien selon l'une des revendications précédentes, caractérisé en ce que les griffes de maintien (82) sont agencées dans des gorges longitudinales (84) de la pièce coulissante (20).

11. Dispositif de maintien selon l'une des revendications précédentes, caractérisé en ce que les goujons de montage (86) des griffes de maintien (82) sont assurés à l'encontre de leur perte par contact contre des surfaces de paroi du canal (36).

12. Dispositif de maintien selon l'une des revendications précédentes, caractérisé en ce que la pièce coulissante est réalisée sous forme d'un poinçon (20) d'un dispositif de poinçonnage, lequel est fixé à un boîtier (4) d'une partie supérieure de presse (2), laquelle est mobile verticalement par rapport à une matrice (62) qui reçoit le composant en forme de plaque (64).

13. Dispositif de maintien selon la revendication 12, caractérisé en ce que le canal (36) qui reçoit le poinçon (20) est agencé au milieu dans la pièce de guidage (32), et en ce que la pièce de guidage (32) est montée en déplacement dans une ouverture de guidage (34) agencée au milieu du boîtier (4).

14. Dispositif de maintien selon la revendication 13, caractérisé en ce que la pièce de guidage (32) est précontrainte en éloignement de la partie supérieure de presse (2) au moyen de ressorts (38) agencés à l'intérieur de l'ouverture de guidage (34) autour du poinçon (20).

15. Dispositif de maintien selon l'une ou l'autre des revendications 13 et 14, caractérisé en ce que le canal (36) et/ou l'ouverture de guidage (34) présentent une section rectangulaire.

16. Dispositif de maintien selon l'une des revendications précédentes, caractérisé en ce que la pièce de guidage (32) est divisée pour faciliter la réalisation du canal (36), et en ce que les deux parties (32a, 32b) sont maintenues ensemble par des organes de fixation détachables (46, 48).

17. Dispositif de maintien selon l'une des revendications 12 à 16, caractérisé en ce que le poinçon (20) est fixé sur le boîtier (4) au moyen d'une plaque de pression (22) agencée sur le fond de l'ouverture de guidage (34) et d'une tige de centrage (26) qui traverse la plaque de pression (22).

18. Dispositif de maintien selon l'une des revendications 12 à 17, caractérisé en ce que le boîtier (4) est monté sur la partie supérieure de presse (2) au choix au moyen de vis de fixation (10) ou de griffes de serrage (12) en utilisant des tiges de centrage (6, 8).

19. Dispositif de maintien selon l'une des revendications précédentes, caractérisé en ce que, du côté du canal (36) opposé à l'ouverture d'amenée (56) est prévu un commutateur de proximité (70) pour constater la présence d'un élément (60).

20. Dispositif de maintien selon l'une des revendications précédentes, caractérisé en ce que la pièce coulissante (20) et la pièce de guidage (32) sont réalisées en matériaux qui rendent superflus une lubrification, et en ce que la pièce de guidage (32) est réalisée en particulier en bronze et la pièce de coulissement (20) est réalisée en particulier en acier à outils.

21. Dispositif de maintien selon l'une des revendications 1 à 12, caractérisé en ce que le dispositif de maintien fait partie d'un appareil de soudage électrique pour souder un écrou ou une autre pièce d'assemblage sur le composant en forme de plaque, et dans lequel la pièce coulissante (20) sert de première électrode et une contre-surface stationnaire (62) qui soutient l'élément en forme de plaque (64) sert de seconde électrode, qui sont alimentées en puissance électrique par des alimentations de courant.

22. Procédé pour mettre en place une pièce d'assemblage ou une pièce d'assemblage accessoire (60) dans un composant en forme de plaque (75) au moyen d'un appareil pour enfoncer ou pour fixer des pièces d'assemblage ou des pièces d'assemblage accessoires, comme par exemple des écrous, des goujons, des rivets, dans des composants en forme de plaque (75), caractérisé en ce que la pièce d'assemblage ou la pièce d'assemblage accessoire (60) est maintenue, après transmission à l'appareil, sur tout le trajet jusqu'au composant en forme de plaque (75) sans autre transmission entre les éléments (20, 82) de l'appareil.
